(19) Europäisches Patentamt
European Patent Office
Office européen des brevets

(11) Veröffentlichungsnummer: 0 206 140 B1

# (12) EUROPÄISCHE PATENTSCHRIFT

(45) Veröffentlichungstag der Patentschrift: 22.08.90

(51) Int. Cl.[5]: C09C 1/62, C09C 1/64, C09D 5/38

(21) Anmeldenummer: 86108017.4

(22) Anmeldetag: 12.06.86

## (54) Stabilisierte Metallpigmente.

(30) Priorität: 20.06.85 AT 1829/85

(43) Veröffentlichungstag der Anmeldung: 30.12.86 Patentblatt 86/52

(45) Bekanntmachung des Hinweises auf die Patenterteilung: 22.08.90 Patentblatt 90/34

(84) Benannte Vertragsstaaten: BE CH DE FR GB IT LI NL SE

(56) Entgegenhaltungen:
EP-A- 0 133 644
DE-B- 2 505 435
FR-A- 2 518 560

(73) Patentinhaber: Vianova Kunstharz Aktiengesellschaft, A-8402 Werndorf(AT)

(72) Erfinder: Wilfinger, Werner, Dr., Händelstrasse 52, A-8042 Graz(AT)
Erfinder: Friedl, Maximilian, Dr. Karl Renner Strasse 347, A-8101 Gratkorn(AT)



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft gegen chemische Einflüsse, insbesonders gegen Wasser bzw. Feuchtigkeitseinwirkung stabilisierte Metallpigmente. Durch die Erfindung soll im besonderen eine einwandfreie Verarbeitung von Aluminiumpigmenten in Wasserlacken ermöglicht werden.

Die Erfindung betrifft weiters das Verfahren zur Stabilisierung von Metallpigmenten, sowie die Verwendung der nach diesem Verfahren stabilisierten Metallpigmente, insbesonders von auf diese Weise stabilisierten Aluminiumpigmenten, in Wasserlacken.

Die sogenannten "Metalleffekt-Lacke" erfreuen sich einer steigenden Beliebtheit, besonders bei der industriellen Serienlackierung, vor allem in der Kraftfahrzeugindustrie. Für Metalleffekt-Lacke werden in den meisten Fällen Aluminiumpulver von verschiedener Feinheit und Oberflächenbehandlung verwendet, wobei die Struktur der Metallteilchen zur Erzielung der gewünschten Effekte stets blättchenförmig ist. Dieser Tendenz steht die durch die derzeit verwendeten Lacke bedingte Umweltbelastung gegenüber, welche durch den wesentlich höheren Lösemittelgehalt im Vergleich zu den Lacken ohne Metalleffekt bedingt ist.

Dem Einsatz von Wasserlacken stellt sich auf dem Gebiet der Metalleffektlacke die Schwierigkeit entgegen, daß die in feiner Form vorliegenden unedlen Metallpigmente mit Wasser unter Bildung von Wasserstoff reagieren. Durch diese Reaktion wird einerseits der gewünschte optische Effekt vermindert oder zerstört, andererseits kann das entwickelte Wasserstoffgas zur Explosion der Lackbehälter führen.

Es wurde bereits in vielfältiger Weise versucht, die Schwierigkeiten, wie sie beim Einsatz von Aluminiumpigmenten auftreten, zu überwinden. So werden für Wasserlacke von den Pigmentherstellern eigene Aluminiumpigmentpasten angeboten. Beispielsweise wird in der Firmenschrift "Alcoa Pigments Technical Data" Report No. 100, July 1975 unter dem Titel "Aluminium Hydro-Pastes Promise Industry-Wide Impact" eine neue Technologie beschrieben, bei welcher das Aluminiumpigment neben einem Netzmittel einen flüchtigen Korrosionsinhibitor enthält. Ähnliche Behandlungsmethoden mit wasserabweisenden Mitteln werden von anderen Autoren empfohlen. So werden gemäß US-PS 3,926,874 Polyamide, Fettamide oder fluor- bzw. siliconhaltige Netzmittel mit spezifischen Oberflächenspannungen für diesen Zweck herangezogen. Gemäß US-PS 3,839,254 werden dafür Perfluoralkyl-Netzmittel verwendet, während die US-PS 4,138,270 Fettsäuren oder Fettsäurealkanolamide in Kombination mit nichtionischen Netzmitteln verwendet. Ein ähnliches Verfahren wird auch in der EP-A2- 0 133 643 beschrieben.

Alle diese Methoden bieten jedoch keinen ausreichenden Dauerschutz für das Metallpigment im Lack oder der Farbe. Es kann angenommen werden, daß die Zusatzmittel infolge ihrer geringen Haftung auf der Aluminiumoberfläche durch die auch in wäßrigen Lacken enthaltenen organischen Lösungsmittel, Amine und die vorhandenen Bindemittel von der Metalloberfläche abgelöst oder verdrängt werden. Außerdem führt der hydrophobe Charakter der Coatungsmittel zu Benetzungsschwierigkeiten und im weiteren zum Ausfallen des Pigments, soferne nicht genügend große Anteile von Emulgatoren eingesetzt werden. Dadurch werden jedoch die Beständigkeitseigenschaften der Lackfilme negativ beeinflußt.

Eine weitere Methode zum Schutz von Metallpigmenten gegen den Einfluß von Wasser besteht in einer Beschichtung der Pigmentteilchen mit vernetzten Polymeren. So beschreibt die US-PS 3,616,397 ein Verfahren, bei dem die Pigmentteilchen mit einer dünnen Schicht eines vernetzten Polymeren durch Polymerisation von Acrylmonomeren in Gegenwart des Pigmentes beschichtet werden. Die Polymerisation erfolgt in einem organischen Lösungsmittel, aus welchem das beschichtete Pigment durch Filtration abgetrennt wird.

Nachteilig bei dieser Beschichtungsmethode wirkt sich der Umstand aus, daß zur Herstellung dieser Spezialpigmente mehrere aufwendige Verfahrensschritte notwendig sind. Überdies besteht die Gefahr, daß die überaus dünne Schutzschicht im Zuge der Herstellung oder beim Transport des Lackes, z. B. mittels der üblichen Zahnradpumpen in Ringleitungen, leicht beschädigt werden kann, wodurch die korrosionsschützende Wirkung verringert wird.

Dieselben Einwände gelten auch für das in der DE-AS 24 32 796 beschriebene Verfahren, gemäß welchem die Metallpigmente zum Schutz gegen atmosphärische Korrosion in einer Polymerisationsreaktion von Vinylmonomeren überzogen werden. Obwohl hier durch Mitverwendung von phosphorsäurehaltigen Monomeren die Haftfestigkeit der Schutzschicht auf der vorher aktivierten Oberfläche der Pigmentteilchen verbessert werden kann, bleibt der Nachteil der aufwendigen Herstellung der Pigmentpräparationen sowie die Empfindlichekit der Schutzhülle gegenüber mechanischen Beschädigungen bestehen.

Zur Vermeidung der beschriebenen Nachteile wird in der AT-PS 372 696 ein Verfahren zur Stabilisierung von Metallpigmenten gegen korrosive Medien, insbesonders in anionischen Wasserlacken vorgeschlagen, bei welchem die Metallpigmentteilchen mit einem Reaktionsprodukt aus einem mit niedrigen Alkoholen veretherten Amino-Formaldehyd-Kondensationsprodukt und Phosphorsäurederivaten überzogen werden. Es hat sich jedoch gezeigt, daß Lacke, welche die in dieser Weise beschichteten Metallpigmente enthalten, zur Vermeidung von Flokkulationserscheinungen auf höhere pH-Werte eingestellt werden müssen, wodurch wiederum die Aggressivität des wäßrigen Milieus auf das Metallpigment soweit erhöht wird, daß die schützende Sperrschicht durchbrochen wird und das Aluminiumpigment langsam zerstört wird.

Eine andere Art der Beschichtung wird in der DE-OS 30 20 073 beschrieben, wonach in Wasser dispergierbare Pastenzusammensetzungen von Metallpulvern erhalten werden, wenn man als Beschichtungsmaterial organische Phosphorsäureester langkettiger Alkohole einsetzt. Diese Beschichtungsmaterialien gehen eine feste Verbindung zum Metall ein, wodurch die Gefahr der Ablösung oder Verdrängung durch das Bindemittel nicht mehr besteht.

Aus der EP-A1- 01 33 644 ist eine ähnliche Methode zur Stabilisierung von Metallpigmenten durch aminneutralisierte Phosphorsäureester von Alkylphenolen bekannt geworden. Beiden Verfahren haftet jedoch der Nachteil an, daß der hydrophobe Molekülrest im wäßrigen Milieu zur Agglomeration des Pigments und damit zu einem unansehnlichen Metalleffekt führt, soferne nicht entsprechende Anteile von Emulgatoren zusätzlich verwendet werden, welche zu anderen Filmstörungen Anlaß geben.

Es wurde nun gefunden, daß es möglich ist, Metallpigmente gegen korrosive Einflüsse, insbesonders gegenüber Wasser bzw. in Wasserlacken zu stabilisieren, wenn man Carboxylgruppen aufweisende Phosphorsäurederivate als Stabilisierungsmittel einsetzt.

Die Erfindung betrifft demgemäß gegen chemische Einflüsse, insbesondere gegen Wasser bzw. Feuchtigkeitseinfluß stabilisierte Metallpigmente, insbesondere Aluminiumpigmente, mittels Phosphorsäurederivaten, welche dadurch gekennzeichnet sind, daß ihre Oberfläche mit einem, gegebenenfalls mit Alkalihydroxiden, Ammoniumhydroxid oder Aminen (teil)neutralisierten Carboxyalkylenphosphorsäureester der Formel (I)

$$HO - \underset{\displaystyle OH}{\overset{\displaystyle O}{\overset{\|}{\underset{|}{P}}}} - O - R - COOH \qquad (I)$$

und/oder Carboxyalkylenphosphorsäure und/oder Carboxyalkylenphosphinsäure der Formel (II)

$$HO - \underset{\displaystyle R_1}{\overset{\displaystyle O}{\overset{\|}{\underset{|}{P}}}} - R - COOH \qquad (II)$$

wobei R einen unverzweigten oder verzweigten, gegebenenfalls halogensubstituierten Alkylenrest mit 2 bis 17 C-Atomen und $R_1$ eine Hydroxylgruppe oder ein Wasserstoffatom darstellt, behandelt wurde.

Die Erfindung betrifft demgemäß weiter ein Verfahren zur Stabilisierung von Metallpigmenten, insbesonders von Aluminiumpigmenten, mittels Phosphorsäurederivaten, welches dadurch gekennzeichnet ist, daß man das Metallpigment, gegebenenfalls in Gegenwart eines Netzmittels und/oder organischer Lösemittel und/oder Wasser mit einem, gegebenenfalls mit Alkalihydroxiden, Ammoniumhydroxid oder Aminen (teil)neutralisierten Carboxyalkylenphosphorsäureester der Formel (I)

$$HO - \underset{\displaystyle OH}{\overset{\displaystyle O}{\overset{\|}{\underset{|}{P}}}} - O - R - COOH \qquad (I)$$

und/oder Carboxyalkylenphosphonsäure und/oder Carboxyalkylenphosphinsäure der Formel (II)

$$HO - \underset{\displaystyle R_1}{\overset{\displaystyle O}{\overset{\|}{\underset{|}{P}}}} - R - COOH \qquad (II)$$

wobei R einen unverzweigten oder verzweigten, gegebenenfalls halogensubstituierten Alkylenrest mit 2 bis 17 C-Atomen und $R_1$ eine Hydroxylgruppe oder ein Wasserstoffatom darstellt, behandelt und anschließend mindestens 12 Stunden bei Raumtemperatur reift.

Weiter betrifft die Erfindung die Verwendung der erfindungsgemäß stabilisierten Metallpigmente, insbesonders von auf diese Weise stabilisierten Aluminiumpigmenten in Wasserlacken.

Gegenüber den bekannten Produkten zeigen die nach dem erfindungsgemäßen Verfahren hergestellten Metallpigmentpasten den besonderen Vorteil, daß damit pigmentierte Wasserlacke auch bei pH-Werten um 9 und gegebenenfalls auch darüber nicht zersetzt werden. Im Gegensatz zu den harzartigen Beschichtungsmitteln sind bei den erfindungsgemäß eingesetzten Produkten zur Stabilisierung nur geringe Mengen, d.h. etwa 0,5 bis 10 Gew.-% bezogen auf das Metallpigment, notwendig, um einen langdauern-

den Schutz zu gewährleisten. Da üblicherweise keine zusätzlichen Netz- oder Emulgiermittel notwendig sind, können auch die durch diese Zusätze auftretenden Nachteile, wie Einbußen bei der Wasser- oder Wetterbeständigkeit der Lackierungen, vermieden werden.

Carboxy-alkanverbindungen des Phosphors, wie sie gemäß Formel (II) für die vorliegende Erfindung zum Einsatz kommen können, werden, wie z. B. in der DE-OS 25 05 435 angegeben wird, als Korrosionsinhibitoren für wasserführende Systeme, z. B. in Kühlwasserkreisläufen, benützt. Die Herstellung der entsprechenden Phosphonverbindungen kann gemäß BE-PS 816,947 erfolgen.

Die für das erfindungsgemäße Verfahren besonders geeigneten und preiswerten Carboxy-alkylphosphorsäureester gemäß Formel (I) werden durch Veresterung von Hydroxycarbonsäuren mit Phosphorsäure oder Polyphosphorsäure bzw. Phosphorpentoxid erhalten. Bei Verwendung von Polyphosphorsäure und Phosphorpentoxid erfolgt die Umsetzung in Gegenwart von Wasser.

Beispiele für solche Hydroxycarbonsäuren sind 3-Oxypropionsäure, gamma-Oxybuttersäure, sowie vorzugsweise längerkettige Hydroxycarbonsäuren, wie epsilon-Hydroxycapronsäure oder 12-Hydroxystearinsäure. Besonders geeignet für die Herstellung der Carboxy-alkyl-phosphorsäureester gemäß Formel (I) sind die Lactone von gamma-, delta- oder- epsilon - Oxycarbonsäuren. Besonders bevorzugt für das erfindungsgemäße Verfahren ist der Phosphorsäureester der epsilon-Hydroxycapronsäure, welcher in einfacher Weise aus epsilon-Caprolacton und Phosphorsäure hergestellt werden kann.

Gegebenenfalls können auch Hydroxycarbonsäuren, deren Alkylenrest mit Halogen substituiert ist, verwendet werden.

Die Stabilisierungsmittel kommen entweder in der Säureform oder nach teilweiser oder vollständiger Neutralisation mit Alkalihydroxiden, Ammoniumhydroxid oder vorzugsweise Aminen, wie Triethylamin, Dimethylaminoethanol, Triethanolamin u. ä. zum Einsatz. Die Stabilisierung kann entweder bereits bei der Herstellung der Metallpigmente oder nachträglich bei den fertigen, im Handel erhältlichen Aluminiumpigmentpasten erfolgen.

Die Menge des zugesetzten Stabilisierungsmittels beträgt 0,1 bis ca. 10 Gew.-% bezogen auf den Metallanteil der Pigmentpaste. Vorzugsweise werden 1 bis 5 Gew.-% eingesetzt. Mengen unter 0,1 Gew.-% sind zur Erzielung des Effektes nicht ausreichend, während Mengen über 10 Gew.-% keine weitere Verbesserung bringen, jedoch die Lackeigenschaften eventuell bereits negativ beeinflussen. Die optimale Menge des Stabilisierungsmittels hängt von der Art des Aluminiumpigments (Partikelgröße, Reinheitsgrad) und dem Lackmaterial (pH-Wert, Bindemitteltyp, Lösemittelgehalt etc.) ab.

Die Anwendung des Stabilisierungsmittels erfolgt durch Mischen mit dem Metallpigment zusammen mit dem gegebenenfalls mitverwendeten Netzmittel und Lösemittel. Eine Mischzeit von 30 Minuten ist als Minimum anzusehen. Vor dem Einsatz des stabilisierten Pigments ist eine Reifungszeit von mindestens 12 Stunden bei Raumtemperatur vorzusehen.

Nach dem erfindungsgemäßen Verfahren können vor allem die von der Industrie in großer Menge eingesetzten Aluminiumpigmente für ihre Verwendung in Wasserlacken stabilisiert werden. Bei anderen Metallpigmenten, z. B. auf Basis von Zink, Magnesium Kupfer, Stahl (Eisen), Bronzen und Messing ist die Wirkung der erfindungsgemäß eingesetzten Verbindungen von Fall zu Fall zu prüfen.

Die Weiterverarbeitung der stabilisierten Pigmentpaste erfolgt in der üblichen Weise durch Einrühren in die übrigen Lackbestandteil, wobei auch andere Buntpigmente und Farbstoffe zur Erzielung besonderer Effekte mitverwendet werden können. Die erfindungsgemäßen Pigmentpasten können in allen nichtionischen oder anionischen wasserlöslichen oder wasserverdünnbaren Lacksystemen eingesetzt werden.

Die nachfolgenden Beispiele erläutern die Erfindung, ohne sie zu beschränken. Alle Angaben in Teilen oder Prozenten beziehen sich, soweit nichts anderes angegeben ist, auf Gewichtseinheiten.

Herstellung der Stabilisierungsmittel

(A) In einem mit Rührer, Thermometer, Wasserabscheider und Kühler ausgestatteten Reaktionsgefäß werden 114 Tle epsilon-Caprolacton vorgelegt und entsprechend der auftretenden Exothermie 116 Tle ortho-Phosphorsäure (handelsübliche 85%ige Lösung in Wasser = 1 Mol $H_3PO_4$) zugegeben. Nach Abklingen der Exothermie wird die Masse auf 200°C erhitzt, wobei 18 Tle Wasser abdestilliert werden. Die klare und hellbraune Masse weist eine Säurezahl von 650 mg KOH/g auf.

(B) In einem wie bei (A) beschriebenen Reaktionsgefäß werden 300 Tle 12-Hydroxystearinsäure (1 Mol) bei 80°C aufgeschmolzen und nach Zugabe von 116 Tlen ortho-Phosphorsäure (85%ig in Wasser) auf 200°C erhitzt. Bei dieser Temperatur werden unter Verwendung von Toluol als Schleppmittel 36 Tle Wasser azeotrop abdestilliert. Es verbleibt eine braune pastöse Masse, welche eine Säurezahl von 365 mg KOH/g aufweist.

(C) In einem wie in (A) beschriebenen Reaktionsgefäß werden 86 Tle gamma-Butyrolacton (1 Mol) vorgelegt und entsprechend der auftretenden Exothermie mit 116 Tlen ortho-Phosphosäure (85%ig in Wasser) versetzt. Nach Abklingen der Exothermie werden bei 200°C 18 Tle Wasser abdestilliert. Die dunkelbraune und klare Masse hat eine Säurezahl von 250 mg KOH/g.

(D) 2-Carboxyethan-phosphonsäure. Handelsübliches Präparat (gegebenenfalls hergestellt gemäß BE-PS 816 947).

Herstellung der Aluminiumpigmentdispersionen

Beispiel 1 - 7: Gemäß Tab. 1 wurden verschiedene Dispersionen von Aluminiumpigmenten hergestellt, wobei die folgenden Pigmente eingesetzt wurden.

MP I Handelsübliche Aluminiumpaste mit einem Feinheitsbereich zwischen 10 µm und 30 µm; Non-leafing-Type; Metallanteil 65 %, Lösungsmittelanteil (incl. Fett- und Zusatzstoffe) 35 %; Lösungsmittel:Testbenzin/aromatische Kohlenwasserstoffe durchschnittliche Teilchengröße (nach DIN 4190): 22µm.

MP II Handelsübliche Spezialaluminiumpaste für Wasserlacke; 65 % Metallgehalt. Nach Angabe des Herstellers enthält die Pigmentpaste einen Korrosionsinhibitor und entspricht in ihrer Teilchengrößenverteilung dem MP I.

Tabelle 1

| B | Aluminium-pigment Tle | Lösemittel Tle | Stabilisierungsmittel Tle | Stabilisierungsmittel % auf Metall |
|---|---|---|---|---|
| 1 | 100 I | 26 BDG<br>87,45 ET | 3,25 (A) | 5 % |
| 2 | 100 II | 26 BDG<br>89,4 ET | 1,30 (A) | 2 % |
| 3 | 100 I | 26 BDG<br>89,4 ET | 1,30 (B) | 2 % |
| 4 | 100 I | 26 BDG<br>89,4 ET | 1,30 (C) | 2 % |
| 5 | 100 I | 26 BDG<br>89,4 ET | 1,30 (D) | 2 % |
| 6 (V) | 100 I | 26 BDG<br>90,7 ET | -- | -- |
| 7 (V) | 100 II | 26 BDG<br>90,7 ET | -- | -- |

Vergleich der gemäß Beispiel 1 - 7 hergestellten Pigmentpasten

Mit den Pigmentpasten gemäß Beispiel 1 - 7 (Beispiele 6 und 7 sind Vergleichsbeispiele) wurden Testlacke hergestellt.

AC Handelsübliches wasserlösliches Acrylcopolymerisat mit 50 % Festkörpergehalt; Lösungsmittel BDG; vom Hersteller als Bindemittel in Kombination mit der Acrylcopolymerdispersion AD als Pigmentiermedium empfohlen.

AD Wäßrige Acrylcopolymerdispersion; vom Hersteller zur Kombination mit dem wasserlöslichen Acrylcopolymerisat AC empfohlen; Festkörpergehalt : 50 %

HMMM Hexamethoxymethylmelamin

p TSS p-Toluolsulfonsäure, 33%ig, neutralisiert mit Dimethylethanolamin, bestehend aus 36,40 Gew.-% p TSS. 1 $H_2O$, 46,55 Gew.-% $H_2O$ und 17,05 Gew.-% Dimethylethanolamin.

Die Prüflacke haben folgende Zusammensetzung:

| | |
|---|---|
| AC (50%ig) | 20,0 Tle |
| Pigmentpaste | 28,3 Tle |
| HMMM | 10,0 Tle |
| p TSS | 1,2 Tle |
| $NH_3$-Lösung (10%ig) | 5,0 Tle |
| Wasser, deionis. | 15,5 |
| AD (50 %) | 40,0 Tle |
| | ---------- |
| | 119,5 Tle |

Die Herstellung der Lacke erfolgt durch Dispergierung der Aluminiumpasten gemäß den Beispielen 1 - 7 im Acrylcopolymerisat AC. Dann wird das Aminoharz (HMMM), der neutralisierte Säurekatalysator (p TSS) und das Neutralisationsmittel (wäßrige Ammoniaklösung, 10 Gew.-% $NH_3$) zugegeben. Nach dem Verdünnen mit Wasser wird mit der Acrylcopolymerdispersion (AD) aufgelackt.

Die Lacke werden mit wäßriger Ammoniaklösung auf einen pH-Wert von 8,5 bis 9,0 eingestellt, mit deionisiertem Wasser auf eine Viskosität von 20 s/DIN 53 211/20°C verdünnt und mit Druckluft auf gereinigtes Stahlblech gespritzt. Nach 10 Minuten Ablüftzeit wird 30 Minuten bei 150°C eingebrannt. Trockenfilmstärke: 30 - 35 µm. Geprüft wurde die Pendelhärte des Lackes gemäß DIN 53 157. Sie lag in allen Fällen bei 140 ± 5 Sekunden. Die Wirkung der erfindungsgemäßen Stabilisierungsmittel wurde nach Applikation der Lacke nach verschiedenen Lagerzeiten des Lackes beurteilt.

A : 1. Applikation: 2 Stunden nach Herstellung
B : 2. Applikation: 24 Stunden nach Herstellung
C : 3. Applikation: 21 Tage nach Herstellung
D : 4. Applikation: 21 Tage nach Herstellung

A - C : Lagerung bei Raumtemperatur

D : Lagerung bei 40°C

Die Beurteilung erfolgt nach folgenden Kriterien:

SH sehr hell
H hell
LV leicht vergraut
SSV sehr stark vergraut
Z Metallpigment zerstört

Folgende Ergebnisse wurden dabei erhalten:

| Lagerung | 1 | 2 | 3 | 4 | 5 | 6(V) | 7(V) |
|---|---|---|---|---|---|---|---|
| A | SH | SH | H | SH | SH | H | H |
| B | SH | SH | H | SH | H | LV | H |
| C | SH | SH | H | H | H | SSV | LV |
| D | H | SH | H | H | H | Z | LV |

## Patentansprüche

1. Gegen chemische Einflüsse, insbesonders gegen Wasser bzw. Feuchtigkeitseinfluß stabilisierte Metallpigmente, insbesonders Aluminiumpigmente mittels Phosphorsäurederivaten, dadurch gekennzeichnet, daß ihre Oberfläche mit einem, gegebenenfalls mit Alkalihydroxiden, Ammoniumhydroxid oder Aminen (teil)neutralisierten Carboxyalkylenphosphorsäureester der Formel (I)

$$HO - \overset{\overset{\displaystyle O}{\|}}{\underset{\underset{\displaystyle OH}{|}}{P}} - O - R - COOH \qquad (I)$$

und/oder Carboxyalkylenphosphonsäure und/oder Carboxyalkylenphosphinsäure der Formel (II)

$$HO - \overset{\overset{\displaystyle O}{\|}}{\underset{\underset{\displaystyle R_1}{|}}{P}} - R - COOH \qquad (II)$$

wobei R einen unverzweigten oder verzweigten, gegebenenfalls halogensubstituierten Alkylenrest mit 2 bis 17 C-Atomen und $R_1$ eine Hydroxylgruppe oder ein Wasserstoffatom darstellt, behandelt wurde.

2. Verfahren zur Stabilisierung von Metallpigmenten, insbesonders von Aluminiumpigmenten, gegen chemische Einflüsse, insbesondere gegen Wasser bzw. Feuchtigkeitseinfluß mittels Phosphorsäurederivaten, dadurch gekennzeichnet, daß man das Metallpigment gegebenenfalls in Gegenwart eines Netzmittels und/oder organischer Lösemittel und/oder Wasser mit einem, gegebenenfalls mit Alkalihydroxiden, Ammoniumhydroxid oder Aminen (teil)neutralisierten Carboxyalkylenphosphorsäureester der Formel (I)

$$HO - \overset{\overset{\displaystyle O}{\|}}{\underset{\underset{\displaystyle OH}{|}}{P}} - O - R - COOH \qquad (I)$$

und/oder Carboxyalkylenphosphonsäure und/oder Carboxyalkylenphosphinsäure der Formel (II)

$$HO - \overset{\overset{\displaystyle O}{\|}}{\underset{\underset{\displaystyle R_1}{|}}{P}} - R - COOH \qquad (II)$$

wobei R einen unverzweigten oder verzweigten, gegebenenfalls halogensubstituierten Alkylenrest mit 2 bis 17 C-Atomen und $R_1$ eine Hydroxylgruppe oder ein Wasserstoffatom darstellt, behandelt und anschließend mindestens 12 Stunden bei Raumtemperatur reift.

3. Verfahren nach Anspruch 2, dadurch gekennzeichnet, daß man als Carboxyalkylenphosphorsäureester der Formel (I) ein Umsetzungsprodukt von gamma-, delta- oder epsilon-Lactonen mit Orthophosphorsäure, Polyphosphorsäure oder Phosphorpentoxid, welches gegebenenfalls in Gegenwart von Wasser hergestellt wurde, heranzieht.

4. Verfahren nach den Ansprüchen 2 und 3, dadurch gekennzeichnet, daß man zur Stabilisierung den Phosphorsäureester der epsilon-Hydroxycapronsäure einsetzt.

5. Verfahren nach den Ansprüchen 2 bis 4, dadurch gekennzeichnet, daß man 0,1 bis 10 Gew.-%, vorzugsweise 1 bis 5 Gew.-% des Stabilisierungsmittels, bezogen auf das Metallpigment, einsetzt.

6. Verfahren nach den Ansprüchen 2 bis 5, dadurch gekennzeichnet, daß man das Metallpigment vor der Lackherstellung mindestens 30 Minuten mit dem Stabilisierungsmittel durchmischt und anschließend mindestens 12 Stunden reifen läßt.

7. Verwendung der stabilisierten Metallpigmente nach den Ansprüchen 1 bis 6, insbesonders von stabilisierten Aluminiumpigmenten in Wasserlacken.

**Claims**

1. Metal pigments, especially aluminium pigments, stabilized against chemical effects, especially against the action of water and moisture, by phosphoric acid derivatives, characterized in that their surface has been treated with a carboxyalkylenephosphoric acid ester of the formula (I)

$$\mathrm{HO - \underset{OH}{\overset{O}{\overset{\parallel}{P}}} - O - R - COOH} \qquad \mathrm{(I)}$$

and/or a carboxyalkylenephosphonic acid and/or carboxyalkylenephosphinic acid of the formula (II)

$$\mathrm{HO - \underset{R_1}{\overset{O}{\overset{\parallel}{P}}} - R - COOH} \qquad \mathrm{(II)}$$

wherein R represents a straight-chain or branched, unsubstituted or halogen-substituted alkylene radical of 2 to 17 carbon atoms and $R_1$ represents a hydroxyl group or a hydrogen atom the compounds of the formulae (I) and/or (II) being (partly) neutralized if appropriate, with alkali metal hydroxides, ammonium hydroxide or amines.

2. Method of stabilizing metal pigments, especially aluminium pigments, against chemical effects, especially against the action of water and moisture, by phosphoric acid derivatives, characterized in that the metal pigment is treated, in the presence or absence of a wetting agent and/or organic solvent and/or water, with a carboxyalkylenephosphoric acid ester of the formula (I)

$$\mathrm{HO - \underset{OH}{\overset{O}{\overset{\parallel}{P}}} - O - R - COOH} \qquad \mathrm{(I)}$$

and/or carboxyalkylenephosphonic acid and/or carboxyalkylenephosphinic acid of the formula (II)

$$\mathrm{HO - \underset{R_1}{\overset{O}{\overset{\parallel}{P}}} - R - COOH} \qquad \mathrm{(II)}$$

wherein R represents a straight-chain or branched, unsubstituted or halogen-substituted alkylene radical of 2 to 17 carbon atoms and $R_1$ represents a hydroxyl group and/or a hydrogen atom, the compounds of the formulae (I) or (II) being (partly) neutralized, if appropriate, with alkali metal hydroxides, ammonium hydroxide or amines, and the treated pigment is subsequently allowed to mature for at least 12 hours at room temperature.

3. Method according to Claim 2, characterized in that a reaction product of γ-, δ- or ε-lactones with orthophosphoric acid, polyphosphoric acid or phosphorus-pentoxide, which product has been prepared in the presence or absence of water, is employed as the carboxyalkylenephosphoric acid ester of the formula (I).

4. Method according to Claims 2 and 3, characterized in that the phosphoric acid ester of ε-hydroxycaproic acid is used for the stabilization.

5. Method according to Claims 2 to 4, characterized in that 0.1 to 10% by weight, preferably 1 to 5% by weight, based on the metal pigment, of the stabilizer are used.

6. Method according to Claims 2 to 5, characterized in that prior to the paint preparation the metal pigment is mixed with the stabilizer for at least 30 minutes and is then allowed to mature for at least 12 hours.

7. Use of the stabilized metal pigments according to Claims 1 to 6, especially of stabilized aluminium pigments, in waterborne paints.

**Revendications**

1. Pigments métalliques stabilisés contre les influences chimiques, en particulier contre l'eau ou l'influence de l'humidité, en particulier pigments à base d'aluminium, à l'aide de dérivés de l'acide phosphorique, caractérisés en ce que leur surface a été traitée avec un ester d'un acide carboxyalkylènephosphorique, éventuellement (partiellement) neutralisé par des hydroxydes alcalins, l'hydroxyde d'ammonium ou des amines, de formule (I)

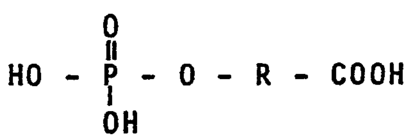

(I)

et/ou un acide carboxyalkylènephosphonique et/ou un acide carboxyalkylènephosphinique de formule (II)

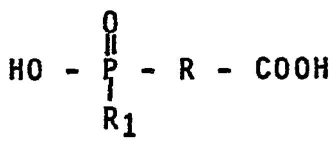

(II)

où R représente un reste alkylène ramifié ou non ramifié, éventuellement halogénosubstitué de 2 à 17 atomes de carbone et $R_1$ représente un groupe hydroxyle ou un atome d'hydrogène.

2. Procédé pour stabiliser des pigments métalliques, en particulier des pigments à base d'aluminium, contre les influences chimiques, en particulier contre l'eau ou l'influence de l'humidité, à l'aide de dérivés de l'acide phosphorique, caractérisé en ce que l'on traite le pigment métallique, éventuellement en présence d'un agent mouillant et/ou d'un solvant organique et/ou d'eau, avec un ester d'un acide carboxyalkylènephosphorique, éventuellement (partiellement) neutralisé par des hydroxydes alcalins, l'hydroxyde d'ammonium ou des amines, de formule (I)

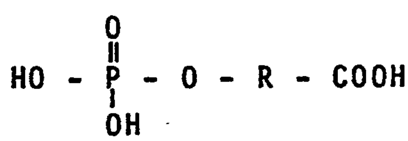

(I)

et/ou un acide carboxyalkylènephosphonique et/ou un acide carboxyalkylènephosphinique de formule (II)

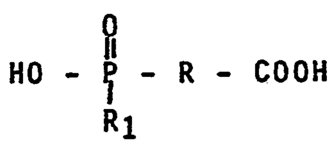

(II)

où R représente un reste alkylène ramifié ou non ramifié, éventuellement halogénosubstitué de 2 à 17 atomes de carbone et $R_1$ représente un groupe hydroxyle ou un atome d'hydrogène, puis on lui fait subir une maturation à la température ambiante pendant au moins 12 heures.

3. Prccédé selon la revendication 2, caractérisé en ce que l'on utilise comme ester d'un acide carboxyalkylènephosphorique de formule (I) un produit de réaction de gamma-, delta- ou epsilon-lactones avec l'acide orthophosphorique, l'acide polyphosphorique ou le pentoxyde de phosphore qui a été éventuellement préparé en présence d'eau.

4. Procédé selon les revendications 2 et 3, caractérisé en ce que l'on utilise pour la stabilisation l'ester phosphorique de l'acide epsilon-hydroxycaproïque.

5. Procédé selon les revendications 2 à 4, caractérisé en ce que l'on utilise 0,1 à 10% en poids, de préférence 1 à 5% en poids de stabilisant, par rapport au pigment métallique.

6. Procédé selon les revendications 2 à 5, caractérisé en ce que l'on mélange le pigment métallique au moins 30 minutes avec le stabilisant avant la préparation de la peinture puis on opère une maturation pendant au moins 12 heures.

7. Utilisation des pigments métalliques stabilisés selon les revendications 1 à 6, en particulier de pigments stabilisés à base d'aluminium dans des peintures à l'eau.